# EUROPÄISCHE PATENTSCHRIFT

(11) **EP 0 556 574 B1**
(45) Veröffentlichungstag und Bekanntmachung des Hinweises auf die Patenterteilung: **09.07.1997**
(21) Anmeldenummer: 93100752.0
(22) Anmeldetag: 20.01.1993
(51) Int. Cl.: G01B 21/00, G01B 21/04, G01B 7/00

(54) **Verfahren zur Koordinatenmessung an Werkstücken**
Method for coordinates measurement on workpieces
Procédé pour la mesure des coordonnées sur des ouvrages

(30) Priorität: 15.02.1992 DE 4204602
(43) Veröffentlichungstag der Anmeldung: 25.08.1993
(73) Patentinhaber: Firma Carl Zeiss, D-73446 Oberkochen (DE); CARL ZEISS-STIFTUNG HANDELND ALS CARL ZEISS, D-89518 Heidenheim (Brenz) (DE)
(72) Erfinder: Breyer, Karl-Hermann, Dr., W-7920 Heidenheim (Brenz) (DE)

(56) Entgegenhaltungen:
- EP-A- 0 029 499
- EP-A- 0 420 416
- DE-C- 2 712 181
- DE-C- 4 316 236

## Beschreibung

Die Erfindung betrifft ein Verfahren zur Koordinatenmessung an Werkstücken mit einem Tastkopf vom schaltenden Typ, der ein Signal bei Kontakt mit dem zu vermessenden Werkstück erzeugt, sowie ein zur Durchführung des Verfahrens geeignetes Koordinatenmeßgerät.

Tastköpfe vom schaltenden Typ liefern bei Berührung mit dem Werkstück entweder ein Schaltsignal, das z.B. von elektrischen Schaltern in den Lagerstellen des beweglichen Taststifts gewonnen wird oder ein impulsförmiges Signal, das beispielsweise von hochempfindlichen piezoelektrischen Elementen im oder in der Nähe des Taststifts erzeugt wird.

Es sind auch schaltende Tastköpfe bekannt, die im Zuge des Antastvorganges zwei unterschiedliche Signale, ein Piezosignal und zusätzlich ein Schaltsignal aus den Lagerstellen des ausgelenkten Taststiftes erzeugen. Beide Signale sind dann zeitlich etwas gegeneinander versetzt, da der Schaltkontakt später öffnet als der empfindlichere Piezokristall erregt wird. Derartige Tastköpfe sind beispielsweise in der DE-OS 38 31 974 oder der DE-PS 27 12 181 sowie der US-PS 41 77 568 beschrieben.

Um die Koordinaten des Antastpunktes an einem Werkstück mit einem solchen Tastkopf zu bestimmen ist man bisher folgendermaßen vorgegangen:

Die Zählerstände der Mießsysteme (Maßstabsysteme) des Koordinatenmeßgerätes wurden dann, wenn z.B. die Intensität des vom Piezokristall abgegebenen Signales eine vorgegebene Triggerschwelle überschritt, in einem Zwischenspeicher festgehalten. Traf innerhalb eines vorgegebenen Zeitraums von 200 ms in der Maschinensteuerung das zweite Schaltsignal aus den Lagerstellen ein, wurde die Antastung als gültig erkannt und anschließend der zwischengespeicherte Positionsmeßwert an den Rechner des Koordinatenmeßwertes übergeben. Im anderen Falle veranlaßte die Steuerung des Koordinatenmeßgerätes eine Wiederholung der Messung. In diesem Falle ging die Steuerung davon aus, daß es sich bei dem Piezosignal nicht um ein Signal handelte, das den Kontakt mit dem Werkstück anzeigt, sondern beispielsweise ein durch Vibrationen oder Lärm aus der Umgebung, den Lagern oder den Antrieben der Maschine verursachtes Falschsignal, eine sogenannte "Luftantastung".

Auch in der EP-B1 0 025 485 ist ein dem oben dargestellten sehr ähnliches Verfahren beschrieben.

Das bekannte Verfahren arbeitet zwar in vielen Situationen zufriedenstellend, führt jedoch bei einigen Anwendungsfällen zu ungültigen Antastungen. Wenn beispielsweise Teile mit rauher Aluminiumoberfläche oder überhaupt Werkstücke bei geringen Antastgeschwindigkeiten vermessen werden, bleibt das Signal des Piezoelementes aus bzw. geht im Störsignalpegel unter. In solchen Fällen bringt auch eine Wiederholung der Messung keine anderen Ergebnisse, es muß dann entweder die Antastgeschwindigkeit erhöht werdem oder es muß allein das elektromechanische Schaltsignal aus den Lagerstellen die Funktion des Antastsignals übernehmen. Damit verbunden ist jedoch eine Einbuße an Meßgenauigkeit, da das Schaltsignal aus den Lagestellen zu einem späteren Zeitpunkt auftritt als das Signal des Piezoelementes und somit nicht mehr die exakten Kontaktkoordinaten des Antastpunktes charakterisiert.

Es ist die Aufgabe der vorliegenden Erfindung ein Verfahren zur Koordinatenmessung an Werkstücken mit einem Tastkopf vom schaltenden Typ anzugeben, mit dem die vorstehend geschilderten Nachteile überwunden werden und insbesondere beim langsamen Antasten von weichen Objektoberflächen der Kontaktzeitpunkt bzw. die Kontaktkoordinaten genauer bestimmt werden können.

Diese Aufgabe wird durch ein Verfahren eine Einrichtung mit den im Anspruch 1/8 angegebenen Merkmalen gelöst.

Gemäß der Erfindung werden der zeitliche Verlauf des bzw. der Kontaktsignale und die Positionsmeßwerte (x, y, z) der Meßsysteme (Maßstäbe) des Koordinatenmeßgerätes in einem ausreichend groß bemessenen Zeitintervall vor, während und nach dem Kontaktzeitpunkt zwischen Taststift bzw. Tastkugel und Werkstück gespeichert und der exakte Kontaktzeitpunkt nachträglich berechnet. Da in diesem Falle dann der gesamte Signalverlauf des Antastsignals bzw. Kontaktsignals für die Berechnung bzw. Interpolation auf den Kontaktzeitpunkt zur Verfügung steht, lassen sich mit dem Verfahren bedeutend genauere Ergebnisse erzielen. Die Genauigkeit der Koordinatenmessung hängt dann nicht mehr davon ab, ob beispielsweise ein dem Kontaktsignal zufällig überlagerter Störimpuls eine Triggerschwelle vorzeitig bzw. zu spät durchschalten läßt.

Das Verfahren eignet sich sowohl für Tastköpfe, deren Kontaktsignal durch hochempfindliche Sensoren wie z.B. Piezoelemente geliefert wird, als auch für Tastköpfe, die das Kontaktsignal allein aus Schaltern im Lager des Taststifts generieren. Es läßt sich mit besonderem Vorteil einsetzen in Verbindung mit Tastköpfen, die zwei unterschiedliche Signale zweier verschiedener Sensoren liefern. In diesem Falle ist es zweckmäßig, den zeitlichen Verlauf beider Signale zu speichern.

Es ist außerdem nicht erforderlich, das Kontaktsignal in der vom Sensor gelieferten Form zu speichern. Das Sensorsignal kann auch vor der Abspeicherung gleichgerichtet und/oder gefiltert werden. In diesem Falle liegt ein "einfacheres" Signal vor, das mit geringerer Speichertiefer bzw. niedrigerer Abtastfrequenz später ausgewertet werden kann.

Besonders vorteilhaft ist es, wenn zur Berechnung des exakten Antastzeitpunktes der gespeicherte Signalverlauf mit dem Signalverlauf eines oder mehrerer Mustersignale korreliert wird. Das Verfahren erlaubt es dann, die Antastung einer Plausibilitätsprüfung zu unterziehen. Diese kann so aussehen, daß der Antastvorgang nochmals wiederholt wird, wenn die Korrelation des gespeicherten Kontaktsignales mit dem Mustersignal unterhalb eines vorgegebenen Korrelationsfaktors liegt. Erst dann, wenn die Korrelation den vorgegebenen Grenzwert überschreitet, wird anschließend der exakte Kontaktzeitpunkt bzw. die zugehörige Kontaktposition aus dem Signalverlauf interpoliert.

Zu diesem Zwecke können natürlich im Speicher der Auswerteeinheit, von der die Korrelation durchgeführt wird, mehrere Mustersignalverläufe, abhängig von Antastgeschwindigkeit, Materialpaarung oder weiteren Parametern wie z.B. Taststiftlänge oder Tastkugeldurchmesser abgelegt werden. In diesem Falle wird das richtige Mustersignal entsprechend der für den angefahrenen Antastpunkt gültigen Maschinenparameter ausgewählt.

Weitere Vorteile der Erfindung ergeben sich aus der nachfolgenden Beschreibung eines Ausführungsbeispiels anhand der Figuren 1-8 der beigefügten Zeichnungen.
- Figur 1: ist eine perspektivische Prinzipskizze eines Koordinatenmeßgerätes, mit dem das erfindungsgemäße Verfahren ausgeführt werden kann;
- Figur 2: ist ein vereinfachtes Blockschaltbild, das die wesentlichen für die Signalverarbeitung entsprechend dem Verfahren erforderlichen Komponenten zeigt;
- Figur 3-7: sind Diagramme, in denen der zeitliche Verlauf des Kontaktsignals bzw. eines Mustersignales in verschiedenen Stadien der Signalverarbeitung dargestellt sind.

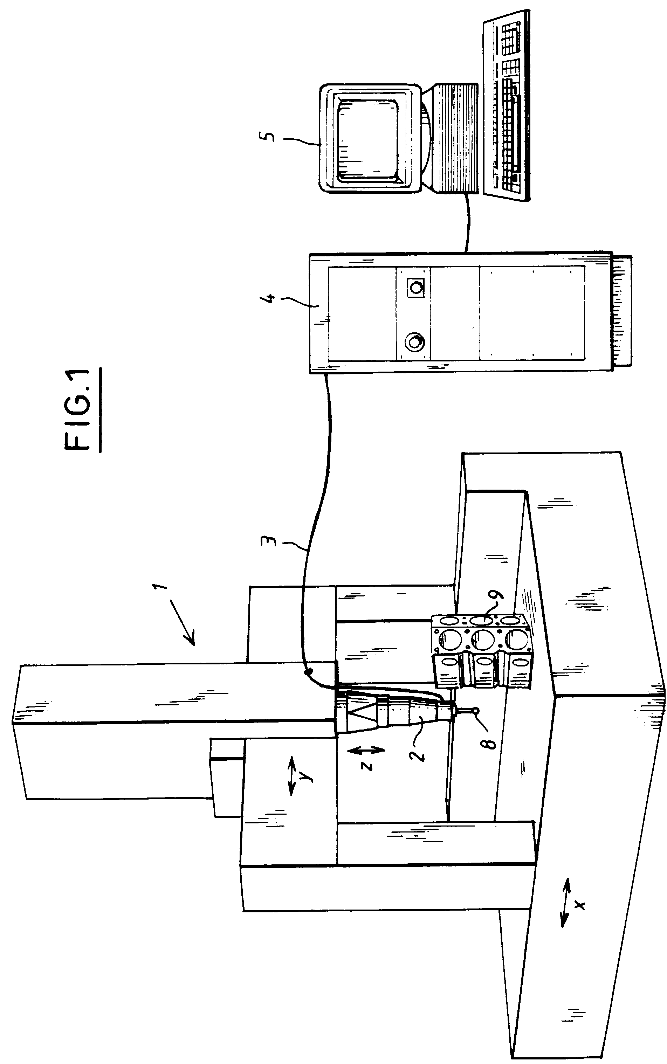

Das in Figur 1 stark vereinfacht dargestellte Koordinatenmeßgerät (1) besitzt einen Tastkopf (2), mit dessen Tastkugel (8) die Oberfläche des Werkstücks (9) vermessen werden soll. Mit (4) sind die Steuerung und mit (5) der Auswerterechner des Koordinatenmeßgerätes bezeichnet. Der Tastkopf (2) ist über eine Signalkabel (3) mit der Steuerung (4) verbunden.

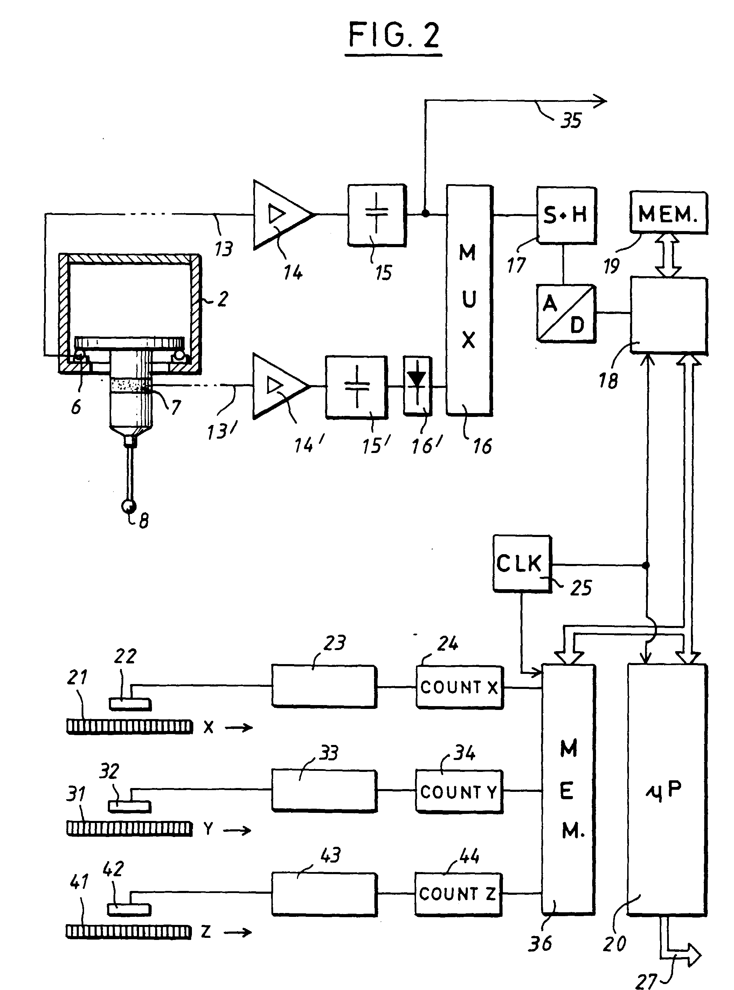

Wie aus der schematischen Darstellung aus Figur 2 hiervorgeht ist der Taststift mit der Tastkugel (8) des Tastkopfes (2) beweglich auf Kugeln gelagert. Hierbei bilden die in drei jeweils um 120° versetzt angeordnete Kugelpaare eingreifenden Zylinderkörper des Taststifts zusammen mit den Kugelpaaren elektrische Schalter, die in Reihe geschaltet sind. Die Signalleitung dieses ersten Schaltsignales ist mit (13) bezeichnet. Das Schaltsignal (13) gelangt über eine Verstärkerstufe (14) und eine Filterstufe (15) an einen der beiden Eingänge eines Multiplexers (16).

Weiterhin besitzt der Taststift einen piezoelektrischen Sensor (7), der über eine zweite Signalleitung (13') an den Eingang eines zweiten Vorverstärkers (14') gelegt ist.

Dem Verstärker (14') ist ein Hochpaßfilter (15') und diesem wiederum eine Gleichrichterstufe (16') nachgeschaltet. Der Ausgang des Gleichrichters (16') ist an den zweiten Eingang des Multiplexers (16) gelegt.

Der Ausgang des Multiplexers (16) ist mit einer Sample- und Holdstufe (17) verbunden, von der im Zeitmultiplexbetrieb abwechselnd die Intensität der gleichgerichteten und gefilterten Signale des Piezokristalls (7) bzw. des Schaltkontaktes (6) abgefragt und anschließend an eine Signalverarbeitungseinrichtung (18) übergeben werden. Die Einrichtung (18) ist mit Speichereinheiten (19) verbunden, in denen dann der zeitliche Verlauf der beiden Signalfolgen abgelegt wird.

Natürlich ist es nicht erforderlich, die Signalfolgen während eines kompletten Meßvorganges zu speichern. Vielmehr können dann, wenn im Zuge der nachfolgend noch beschriebenen Auswertung eine Antastung als gültig erkannt worden ist, die gespeicherten Signalverläufe wieder überschrieben werden.

Die Datenübernahme in den Speicher (19) ist mit dem Maschinentakt eines Taktgebers (25) synchronisiert und erfolgt in sehr kurzen zeitlichen Abständen von beispielsweise 10 µs. Das Signal des mechanischen Kontaktes (6) ist außerdem über eine weitere Signalleitung (35) direkt der Steuerung (4) des Koordinatenmeßgeräte zugeführt. Diese schaltet beispielsweise beim Öffnen des Kontaktes nach einer zusätzlichen Plausibilitätsprüfung den Antrieb ab bzw. steuert den Antrieb um, damit der Taststift wieder vom Werkstück (9) weg frei fährt.

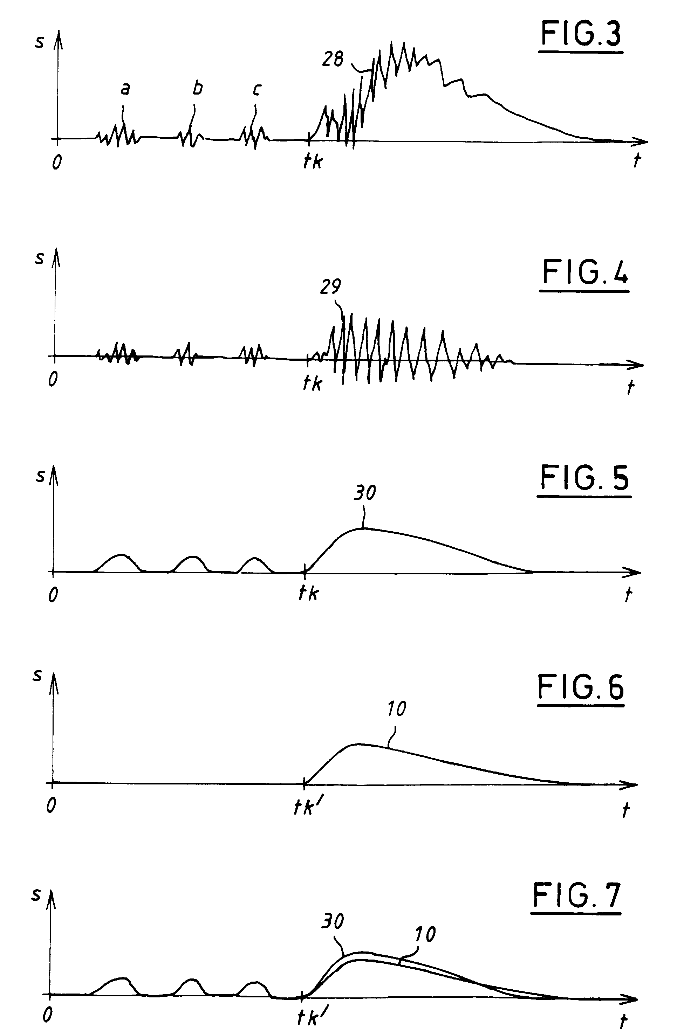

In Figur 3 ist der Signalverlauf des vom Piezokristall (7) abgegebenen Signales auf der Signalleitung (23) beispielhaft dargestellt. Auf drei mit (a, b und c) bezeichnete Störimpulse folgt nach der zum Zeitpunkt (tk) angenommenen Berührung mit dem Werkstück ein Signal (28), das sich aus einem Gleichanteil sowie einem Wechselanteil zusammensetzt.

Dieser Signalverlauf ist typisch für einen Antastvorgang. Hierbei entspricht das Gleichsignal dem Kraftsignal des Taststifts, der unter Federwirkung an der Werkstückoberfläche anliegt. Das dem Gleichsignal überlagerte Wechselsignal ist nicht durch Störimpulse verursacht, sondern stellt die im Moment der Antastung beim Kontakt mit dem Werkstück erzeugte Schallwelle dar.

Nach Durchgang durch den Kochpaß (15') hat das Signal des Piezokristalls (7) den in Figur 4 dargestellten Verlauf und nach Durchgang durch die Gleichrichterstufe (36) ergibt sich der in Figur 5 dargestellte zeitliche Verlauf (30) für das Piezosignal. Der Verlauf dieses Signals (30) wird im Speicher (19) abgelegt.

Während eines Antastvorganges werden gleichzeitig die von den Leseköpfen (22, 32 und 42) der x-, y- und z-Maßstäbe (21, 31 und 41) des Koordinatenmeßgerätes (1) gelieferten Signalfolgen der inkrementalen Meßsysteme nach digitaler Interpolation in drei Interpolatoren (23, 33 und 43) Zählerbausteinen (24, 34 und 44) zugeführt. Die Zählerausgänge sind mit einer zweiten Speichereinheit (36) verbunden, in der dann der zeitliche Verlauf der Zählerstände ebenfalls im Maschinentakt beispielsweise in Zeitabständen von einer Millisekunde abgelegt werden.

Auch der Speicher (36) mit den abgespeicherten Positionsmeßwerten bzw. Zählerständen kann immer wieder neu überschrieben werden. Es ist lediglich erforderlich, daß die Positionsmeßwerte über ein Zeitintervall von beispielsweise einer Sekunde gespeichert vorliegen.

Einen Antastvorgang erkennt die Signalverarbeitungseinrichtung (18) beispielsweise daran, daß die vom Schaltkontakt (6) gelieferte Signalfolge eine vorgebene Triggerschwelle während einer vorbestimmten Zeitspanne überschritten hat. In diesem Falle übergibt die Signalverarbeitungseinrichtung (18) die gespeicherten Signalverläufe (30) des Piezosignals, die gespeicherten Signalwerte des Schaltsignals sowie eines von mehreren im Speicher (19) abgespeicherten Mustersignalen an den Mikroprozessor (20). Bei dem Mustersignal handelt es sich um ein für die betreffende Antastgeschwindigkeit, die betreffende Materialpaarung sowie die Länge des eingewechselten Taststifts charakteristisches "gutes" aus vielen Tastvorgängen gemitteltes Signal, ein sogenanntes "Template" (10). Dessen Verlauf ist in Figur 6 dargestellt.

Der Mikroprozessor (20) korreliert dieses "Template" (10) mit dem Signalverlauf (30) (Figur 7), und zwar für verschiedene Positionen des "Template" (10) auf der Zeitachse (t), d.h. das "Template" (10) wird auf der Zeitachse über den Signalverlauf (30) geschoben und der Korrelationsfaktor für die verschiedenen Positionen auf der Zeitachse bestimmt. Liegt der Korrelationsfaktor über einen vorgegebenen Grenzwert, so ist ein erstes Kriterium für eine gültige Antastung erfüllt und es wird anschließend der exakte Antastzeitpunkt (tk) bestimmt.

Der exakte Antastzeitpunkt (tk) wird vom Mikroprozessor aus dem Signalverlauf des Templates (10) an der Stelle auf der Zeitachse (t) abgeleitet, für die sich der höchste Wert des Korrelationsfaktors ergeben hat. Dem "Template" (10) ist bezogen auf seinen Signalverlauf ein "exakter" Kontaktzeitpunkt (tk') zugeordnet und die für diesen Zeitpunkt (tk') gespeicherten Zählerstände bilden entsprechend die korrekten Antastkoordinaten (xk, yk, zk) für den angetasteten Meßpunkt.

In ähnlicher Weise wird der zeitliche Verlauf des Signals des mechanischen Kontakts behandelt. Auch dieser Signalverlauf wird mit einem gespeicherten "guten" Signalverlauf eines "Templates" korreliert. Anschließend wird ein Zeitpunkt (tb) der Öffnung des mechanischen Kontaktes aus dem Signalverlauf desjenigen Templates berechnet, für das sich der größte Korrelationsfaktor ergibt. Beide Zeitpunkte, der Zeitpunkt (tb) und der Zeitpunkt (tk') müssen in einem vorgegebenen Zeitfenster von beispielsweise 100 ms liegen. Ist dies der Fall, so ist ein zweites Kriterium für eine gültige Antastung erfüllt. Andernfalls wird die Messung wiederholt.

Der Mikroprozessor (20) übergibt die zum berechneten Antastzeitpunkt (tk) gehörenden Koordinatenwerte (xk, yk und zk) über den Datenbus (27) an den Rechner (5) des Koordinatenmeßgerätes.

Im beschriebenen Ausführungsbeispiel wurde das Signal des Piezokristalles (7) vor der Speicherung gefiltert und gleichgerichtet. Natürlich ist es auch möglich, das vom Vorverstärker (14') abgegebene Signal direkt zu speichern und beispielsweise neben dem Wechselanteil auch den Gleichspannungsanteil des Kontaktsignales bei der Plausibilitätsprüfung bzw. der Ermittlung des exakten Antastzeitpunktes mit zu berücksichtigen.

Anstelle der Korrelation sind auch andere Verfahren der digitalen Signalverarbeitung einsetzbar. Im einfachsten Fall beispielsweise die nachträgliche Filterung des gespeicherten Signals und Überwachung darauf, ob z.B. ein vorgegebener Schwellwert überschritten wird. Hierbei kann das gespeicherte Signal auch nacheinander mehrfach unterschiedlichen digitalen Filterungsprozessen unterworfen werden und die gefilterten Signale können auf das Erfüllen verschiedener Kriterien wie Signalintensität, Signaldauer, Frequenzverteilung etc. abgeprüft werden.

## Patentansprüche

1. Verfahren zur Koordinatenmessung an Werkstücken (9) mit einem Tastkopf (2) vom schaltenden Typ, der ein Signal (13, 13') bei Kontakt mit dem zu vermessenden Werkstück erzeugt, dadurch gekennzeichnet, daß der zeitliche Verlauf (28) des Kontaktsignals gespeichert wird und die Positionsmeßwerte (x, y, z) mindestens in einem Zeitintervall vor, während und nach dem Kontaktzeitpunkt gespeichert werden und der innerhalb des Intervalls liegende exakte Kontaktzeitpunkt (tk) bzw. die Kontaktkoordinaten (xk, yk, zk) nachträglich berechnet werden.

2. Verfahren nach Anspruch 1, wobei der Tastkopf (2) im Zuge des Kontakts mit dem Werkstück (9) zwei unterschiedliche Signale (13; 13') von verschiedenen Sensoren (6, 7) liefert und der zeitliche Verlauf beider Signale gespeichert wird.

3. Verfahren nach Anspruch 2, wobei die Signale über einen Multiplexer (16) im Zeitmultiplexbetrieb in ihre Speicher (19) eingelesen werden.

4. Verfahren nach Anspruch 1, wobei das Signal (13') vor der Speicherung gleichgerichtet bzw. gefiltert wird.

5. Verfahren nach Anspruch 1, wobei das Signal nach der Speicherung digital gefiltert wird.

6. Verfahren nach Anspruch 1, wobei zur Berechnung des exakten Kontaktzeitpunkts (tk) der gespeicherte Signalverlauf (30) mit dem Signalverlauf (10) eines oder mehrerer Mustersignale korreliert wird.

7. Verfahren nach Anspruch 6, wobei dann, wenn die Korrelation einen vorbestimmten Grenzwert unterschreitet, der Antastvorgang nochmals wiederholt wird und dann, wenn die Korrelation den Grenzwert erreicht bzw. überschreitet, anschließend der exakte Antastzeitpunkt (tk') bzw. die zugehörige Kontaktposition (xk, yk, zk) aus dem signalverlauf (10) interpoliert wird.

8. Koordinatenmeßgerät mit einem Tastkopf (2) vom schaltenden Typ, der ein Signal (13; 13') bei Kontakt mit dem zu vermessenden Werkstück (9) erzeugt, dadurch gekennzeichnet, daß
- das Signal einer Signalverarbeitungseinrichtung (18) einer ersten Speichereinheit (19) zugeführt ist, in der der zeitliche Verlauf (10; 28, 29, 30) von Kontaktsignalen speicherbar ist,
- eine zweite Speichereinheit (26) vorgesehen ist, in der die Meßwerte für die Position (x, y, z) des Tastkopfs mindestens für ein Zeitintervall speicherbar sind, welches den Zeitpunkt (tk) des Kontakts mit dem Werkstück enthält,
- die Speichereinheiten (19, 26) mit einer Auswerteeinheit (20) verbunden sind, die nachträglich aus dem zeitlichen Verlauf (10) eines Kontaktsignales den exakten Kontaktzeitpunkt (tk') bzw. die dazu korrespondierende exakte Kontaktposition (xk, yk, zk) ermittelt.

9. Koordinatenmeßgerät nach Anspruch 8, wobei der Tastkopf ein oder mehrere piezoelektrische Elemente (7), Dehnungsmeßstreifen oder andere empfindliche Sensoren enthält, die das Kontaktsignal (13') erzeugen.

10. Tastkopf nach Anspruch 8, wobei der Tastkopf (2) mindestens zwei unterschiedliche Typen (6, 7) von Signalgebern enthält, die mindestens zwei unterschiedliche bzw. zeitversetzte Kontaktsignale (13; 13') liefern.

11. Koordinatenmeßgerät nach Anspruch 8, wobei im Signalweg zwischen Signalgeber und Speicher ein Filter (15) bzw. ein Gleichrichter (16') eingefügt sind.

## Claims

1. A method for coordinate measurement on workpieces (9), using a probe head (2) of the switching type which produces a signal (13; 13') on contact with the workpiece, characterized by storing the time-varying course (28) of the contact signal and by storing the measured-position values (x, y, z) at least within an interval which spans time before, during and after the contact time, and by computing the exact contact time (tk) within said interval or the contact coordinates (xk, yk, zk) subsequently.

2. A method according to claim 1, in which the probe head (2) supplies, during the course of contact with the workpiece (9), two different signals (13; 13') from different sensors (6, 7) and the time-varying course of both signals is stored.

3. A method according to claim 2, in which the signals are read into storage (19) via a multiplexer (16) in time-division multiplexing.

4. A method according to claim 1, in which the signal (13') is rectified or filtered before storage.

5. A method according to claim 1, in which the signal is digitally filtered after storage.

6. A method according to claim 1, in which, for the computation of the exact contact time (tk), the stored signal course (30) is correlated with the signal course (10) of one or several sample signals.

7. A method according to claim 6, in which the work-contact procedure is repeated if the correlation drops below a predetermined limit value and, if the correlation reaches or exceeds the limit value, the exact contact time (tk') or the corresponding contact position (xk, yk, zk) is subsequently interpolated from the signal course (10).

8. A coordinate-measuring machine having a probe head (2) of the switching type, wherein the probe head produces a signal (13; 13') in the course of contact with the workpiece (9) to be measured, characterized by
- the signal is lead to a signal-processing means (18) of a first storage unit (19) in which the time-varying course (10; 28, 29, 30) of contact signals can be stored,
- a second storage unit (26) in which the measured values for the position coordinates (x, y, z) of the probe head can be stored at least during a time interval which contains the time (tk) of the contact with the workpiece,
- the storage units (19, 26) being connected to an evaluation unit (20) which subsequently determines from the time course (10) of a contact signal, the exact contact time (tk') or the exact contact position (xk, yk, zk) which corresponds to the exact contact time.

9. The coordinate-measuring machine according to claim 8, in which the probe head contains one or more piezoelectric elements (7), strain gauges or other sensitive sensors which produce the contact signal (13').

10. The coordinate-measuring machine of claim 8, in which the probe head (2) contains at least two different types (6, 7) of signal generators which supply at least two different or time-staggered workpiece-contact signals (13; 13').

11. The coordinate-measuring machine of claim 8, in which a filter (15) or a rectifier (16') is inserted in the signal path between probe head and storage unit.

## Revendications

1. Procédé de mesure de coordonnées sur des pièces (9) au moyen d'un palpeur (2) de type dynamique qui génère un signal (13, 13') au contact avec la pièce à contrôler, caractérisé en ce que la progression temporelle (28) du signal de contact est mémorisée et que les valeurs de localisation (x, y, z) sont au moins enregistrées dans un intervalle de temps avant, pendant et après l'instant précis du contact (tk) ou que les coordonnées de contact sont calculées ultérieurement.

2. Procédé de mesure selon la revendication 1, tel que le palpeur (2) délivre deux signaux différents (13; 13') à partir de deux capteurs disparates (6, 7) durant le contact avec la pièce et que la progression temporelle des deux signaux est mémorisée.

3. Procédé de mesure selon la revendication 2, tel que les signaux sont enregistrés dans une mémoire (19) par un multiplexeur (16) dans un mode de multiplexage par répartition dans le temps.

4. Procédé de mesure selon la revendication 1, tel que le signal (13') est redressé et filtré avant sa mémorisation.

5. Procédé de mesure selon la revendication 1, tel que le signal est filtré par voie numérique après sa mémorisation.

6. Procédé de mesure selon la revendication 1, tel que la progression du signal mémorisée (30) est corrélée à celle (10) d'un ou de plusieurs signaux types pour calculer l'instant de contact exact (tk).

7. Procédé de mesure selon la revendication 6, tel que, si la corrélation est inférieure à une valeur limite prédéterminée, l'opération de palpage est effectuée de nouveau et que, si la corrélation atteint ou dépasse alors ladite limite, l'instant de palpage exact (tk') et la position de contact afférente (xk, yk, zk) sont ensuite interpolés à partir de la progression du signal (10).

8. Machine de mesure à coordonnées muni d'un palpeur (2) de type dynamique qui génère un signal (13, 13') au contact avec la pièce à contrôler (9), caractérisée en ce que
- le signal d'un dispositif de traitement (18) est acheminé jusqu'à une première unité de mémorisation (19) dans laquelle la progression temporelle (10; 28, 29, 30) de signaux de contact peut être enregistrée,
- les unités de mémorisation (19, 26) sont reliées à une unité d'exploitation (20) qui détermine ultérieurement l'instant de contact exact (tk') et la position de contact précise correspondante (xk, yk, zk) à partir de la progression temporelle (10) d'un signal de contact.

9. Machine de mesure à coordonnées selon la revendication 8, telle que le palpeur renferme un ou plusieurs éléments piézo-électriques (7), extensomètres ou autres capteurs sensibles qui produisent le signal de contact (13').

10. Palpeur selon la revendication 8, tel que ledit palpeur (2) comprend au moins deux types disparates (6, 7) d'émetteurs de signaux qui fournissent au moins deux signaux de contact (13; 13') différents ou décalés dans le temps.

11. Machine de mesure à coordonnées selon la revendication 8, telle qu'un filtre (15) et un redresseur (16') sont insérés dans le trajet de transmission du signal entre l'émetteur et la mémoire.
